# EUROPÄISCHE PATENTANMELDUNG

(11) **EP 0 914 995 A2**
(43) Veröffentlichungstag der Anmeldung: **12.05.1999**
(21) Anmeldenummer: 98119652.0
(22) Anmeldetag: 17.10.1998
(51) Int. Cl.: B60S 1/52, B60S 1/60

(54) **Reinigungsvorrichtung für eine Scheibe einer Kraftfahrzeugleuchte**

(30) Priorität: 07.11.1997 DE 19749402
(71) Anmelder: Mannesmann VDO Aktiengesellschaft, 60388 Frankfurt am Main (DE)
(72) Erfinder: Kober, Rainer, 64297 Darmstadt (DE)
(74) Vertreter: Klein, Thomas, Dipl.-Ing.

(57) **Zusammenfassung**

Eine Reinigungsvorrichtung für eine Scheibe (1) einer Kraftfahrzeugleuchte hat mehrere über den Umfang der Scheibe (1) verteilte Waschdüsen (2 - 5) . Diese Waschdüsen (2 - 5) werden über eine in einem Befestigungsflansch (6) der Scheibe (1) eingearbeiteten Kanal (7) mit Waschflüssigkeit versorgt. Die Waschdüsen (2 - 5) reinigen die Scheibe (1) durch ein ausschließliches Aufsprühen mit Waschflüssigkeit. Die Reinigungsvorrichtung ist hierdurch besonders kostengünstig herstellbar.

## Beschreibung

Die Erfindung betrifft eine Reinigungsvorrichtung für eine Scheibe einer Kraftfahrzeugleuchte mit zumindest einer zum Besprühen der Scheibe mit Waschflüssigkeit vorgesehenen Waschdüse.

Solche Reinigungsvorrichtungen werden in heutigen Kraftfahrzeugen vielfach für als Frontscheinwerfer ausgebildete Kraftfahrzeugleuchten eingesetzt und sind aus der Praxis bekannt. In der Regel ist die Waschdüse in einem Stoßfänger vor der Scheibe angeordnet. Hierbei kann die Waschdüse mit geringerem Druck Waschflüssigkeit auf die Scheibe sprühen, Dabei benötigt die Reinigungsvorrichtung zusätzlich einen Scheibenwischer, der die Scheibe nach dem Sprühvorgang wischt. Andere Reinigungsvorrichtungen bestehen aus entweder feststehend am Stoßfänger angeordneten oder teleskopartig in ihre Arbeitsposition bewegbaren Düsen, die mit Hochdruck Waschflüssigkeit auf die Streuscheibe sprühen. Durch die festliegende Arbeitsposition ist die Auftreffintensität des Waschstrahls auf einer Streuscheibe und somit durch Reinigung unterschiedlich. Dies schließt jedoch den Einsatz von Scheiben aus Kunststoff aus, weil Kunststoff schnell von an dem Wischer anhaftenden Schmutzteilchen zerkratzt wird. Die Anordnung des Scheibenwischers gestaltet sich zudem sehr kostenintensiv.

Man hat bereits daran gedacht, die Waschdüse auf einem Arm zu befestigen und diesen mit einem geringen Abstand über die Scheibe zu schwenken. Hierdurch hat die Waschdüse beim Sprühvorgang einen besonders geringen Abstand, so dass die Scheibe durch ein ausschließliches Aufsprühen der Waschflüssigkeit besonders gründlich gereinigt wird. Deshalb ist es hierbei nicht mehr erforderlich, die Scheibe nach dem Aufsprühen der Waschflüssigkeit abzuwischen. Nachteilig ist hierbei jedoch, dass die Waschdüse für ihre Bewegung einen kostenintensiven elektromotorischen Antrieb benötigt.

Der Erfindung liegt das Problem zugrunde, eine Reinigungsvorrichtung der eingangs genannten Art so zu gestalten, dass sie besonders kostengünstig herstellbar ist.

Dieses Problem wird erfindungsgemäß dadurch gelöst, dass die Waschdüse in einem unmittelbar an die Scheibe angrenzenden Bereich oder im Bereich der Scheibe befestigt ist.

Durch diese Gestaltung hat die Waschdüse einen sehr geringen Abstand zur Scheibe, so dass die Scheibe im Sprühbereich der Waschdüse durch ausschließliches Aufsprühen der Waschflüssigkeit besonders gründlich gereinigt wird. Deshalb ist kein Scheibenwischer zum Nachwischen der Scheibe erforderlich. Da kein elektromotorischer Antrieb zur Bewegung der Waschdüse oder eines Wischers erforderlich ist, gestaltet sich die erfindungsgemäße Reinigungsvorrichtung besonders kostengünstig. Ein weiterer Vorteil der erfindungsgemäßen Reinigungsvorrichtung besteht darin, dass die zu reinigenden Scheiben aus Kunststoff gefertigt werden können, ohne dass die Gefahr eines Zerkratzens der Oberfläche der Scheibe besteht.

Man könnte daran denken, die Waschflüssigkeit mit einem starken Druck auf die Scheibe aufzusprühen. Hierdurch würde die Scheibe besonders gründlich gereinigt werden. Ein starker Druck an der Waschdüse erfordert jedoch eine sehr kostenintensive Waschflüssigkeitspumpe mit einer hohen Leistungsaufnahme. Ein besonders starker Druck an der Waschdüse lässt sich gemäß einer vorteilhaften Weiterbildung der Erfindung vermeiden, wenn die Waschdüse als Fluidic-Düse ausgebildet ist. Gegenüber einem weitgehend punktuellen Benetzen der Streuscheibe bei Verwendung von Kugeldüsen erfolgt bei Fluidicdüsen ein flächiges Benetzen der Streuscheibe durch den oszillierenden Flüssigkeitsstrahl. Die Größe der intensiv gereinigten Fläche auf der Streuscheibe ist durch die Variation des Düsenabstandes des Düsenöffnungswinkels und des Düsenwinkels zur Streuscheibe einstellbar.

Für eine besonders gründliche Reinigung der Scheibe hat es sich als vorteilhaft erwiesen, wenn der Winkel des Waschflüssigkeitsstrahls zu der Oberfläche der Scheibe ungefähr 30-40° beträgt.

Der Sprühstrahl wird gemäß einer anderen vorteilhaften Weiterbildung der Erfindung von dem Fahrtwind nur unwesentlich abgelenkt, wenn die Waschdüse einen Abstand von ungefähr 15 mm zu der Scheibe aufweist.

Die gesamte Fläche der Scheibe lässt sich gemäß einer anderen vorteilhaften Weiterbildung der Erfindung gleichmäßig reinigen, wenn mehrere Waschdüsen über den Umfang der Scheibe verteilt angeordnet sind.

Bei als Paraboloid-Scheinwerfer ausgebildeten Kraftfahrzeugleuchten wird in der Regel nur ein zentraler Bereich der Scheibe durchleuchtet. Bei solchen Scheinwerfern gestaltet sich die erfindungsgemäße Reinigungsvorrichtung besonders kostengünstig, wenn die Waschdüse mit geringem Abstand von dem Zentrum der Scheibe mit der Sprührichtung auf das Zentrum gerichtet angeordnet ist. Durch diese Gestaltung wird nur der Bereich der Scheibe gereinigt, der von dem Scheinwerfer durchleuchtet wird. Weiterhin benötigt die erfindungsgemäße Reinigungsvorrichtung hierbei besonders wenig Waschflüssigkeit.

Eine Verschmutzung der Waschdüse durch von der Scheibe gespülten Schmutz ist gemäß einer anderen vorteilhaften Weiterbildung der Erfindung besonders gering, wenn die Waschdüse mit der Sprührichtung nach unten weisend ausgerichtet ist.

Die Versorgung der in der Scheibe angeordneten Waschdüse mit Waschflüssigkeit gestaltet sich gemäß einer anderen vorteilhaften Weiterbildung der Erfindung konstruktiv besonders einfach, wenn die Scheibe einen Kanal zur Aufnahme einer zu der Waschdüse führenden Waschflüssigkeitsleitung aufweist.

Ein Einfrieren des innerhalb der Scheibe angeordneten Teils der Waschflüssigkeitsleitung bei starkem Frost könnte man beispielsweise verhindern, wenn man in der Waschflüssigkeitsleitung Heizdrähte vorsieht. Solche Heizdrähte sind jedoch sehr kostenintensiv und belasten zudem die Stromversorgung des Kraftfahrzeuges. Die Waschflüssigkeit in der Waschflüssigkeitsleitung kann sich gemäß einer anderen vorteilhaften Weiterbildung der Erfindung ausdehnen ohne die Scheibe zu beschädigen, wenn der Kanal breiter ist als die Waschflüssigkeitsleitung. Diese Gestaltung trägt zu einer weiteren Verringerung der Fertigungskosten für die erfindungsgemäße Reinigungsvorrichtung bei.

Die innerhalb der Scheibe angeordnete Waschflüssigkeitsleitung ist gemäß einer anderen vorteilhaften Weiterbildung der Erfindung nahezu unsichtbar, wenn der Kanal als Waschflüssigkeitsleitung ausgebildet ist.

Häufig sind mehrere Scheiben von verschiedenen Kraftfahrzeugleuchten nebeneinander angeordnet. Hierbei lässt sich die Waschflüssigkeitsleitung gemäß einer anderen vorteilhaften Weiterbildung der Erfindung für einen Betrachter unsichtbar anordnen, wenn die Waschflüssigkeitsleitung zwischen zwei Kraftfahrzeugleuchten geführt ist. Dies ist insbesondere bei Rücklichtern von Kraftfahrzeugen vorteilhaft, da die Rücklichter häufig aus mehreren Kraftfahrzeugleuchten, wie beispielsweise Fahrtrichtungsanzeiger, Bremslicht oder Rückfahrscheinwerfer, zusammengesetzt sind und eine gemeinsame Scheibe aufweisen.

Insbesondere Scheiben von als Frontscheinwerfer ausgebildeten Kraftfahrzeugleuchten weisen in der Regel mehrere Leuchtbereiche auf, die das abgestrahlte Licht in eine vorgesehene Richtung auslenken. Die Abstrahlrichtung von der in der Scheibe angeordneten Waschflüssigkeitsleitung wird gemäß einer anderen vorteilhaften Weiterbildung der Erfindung besonders gering beeinflusst, wenn die Waschflüssigkeitsleitung zwischen zwei in der Scheibe eingearbeiteten Leuchtbereichen geführt ist.

Die in der Scheibe angeordnete Waschdüse ist gemäß einer anderen vorteilhaften Weiterbildung der Erfindung kaum sichtbar, wenn die Waschdüse aus dem Material der Scheibe gefertigt ist.

Zur weiteren Verringerung der Fertigungskosten der erfindungsgemäßen Reinigungsvorrichtung trägt es bei, wenn die Waschdüse oder eine zum Einsetzen der Waschdüse vorgesehene Aufnahme einteilig mit der Scheibe gefertigt ist.

Die Waschdüse lässt sich gemäß einer anderen vorteilhaften Weiterbildung der Erfindung besonders einfach montieren, wenn die Aufnahme für die Waschdüse eine keilförmige Ausnehmung aufweist und die Waschdüse entsprechend der Ausnehmung gestaltet ist. Durch diese Gestaltung lässt sich die Waschdüse einfach in die Aufnahme eindrücken und ist damit zuverlässig ausgerichtet. Anschließend kann die Waschdüse beispielsweise durch eine Verklebung oder mit Rastmitteln in der Aufnahme befestigt werden.

Eine Beschädigung der Scheibe durch ein Einfrieren der in dem Kanal befindlichen Waschflüssigkeit bei starkem Frost lässt sich einfach dadurch verhindern, dass die erfindungsgemäße Reinigungsvorrichtung Mittel zum Entleeren des Kanals nach dem Besprühen der Scheibe aufweist. Hierdurch ist nur dann Waschflüssigkeit in dem als Waschflüssigkeitsleitung ausgebildeten Kanal, wenn die Scheibe besprüht wird.

Die Waschflüssigkeit lässt sich gemäß einer anderen vorteilhaften Weiterbildung der Erfindung einfach ablassen, wenn die Mittel zum Leerlaufen des Kanals ein von dem Pumpendruck vorgespanntes, einen Ablasskanal verschließendes Ablassventil aufweisen. Der Ablasskanal kann die in dem Kanal verbliebene Waschflüssigkeit beispielsweise in einen Vorratsbehälter zurückführen oder in die Umgebung ablassen. Wenn das Ablassventil oberhalb der Waschdüse angeordnet ist, ermöglicht der Ablasskanal ein Eindringen von Luft in den Kanal. Hierdurch kann die Waschflüssigkeit aus der Waschdüse auslaufen.

Das Ablassventil gestaltet sich gemäß einer anderen vorteilhaften Weiterbildung der Erfindung konstruktiv besonders einfach, wenn es eine innerhalb des Kanals angeordnete, in eine den Ablasskanal freigebende Stellung vorgespannte gummielastische Membran hat.

Häufig sind Vorratsbehälter für die Waschflüssigkeit oberhalb der Kraftfahrzeugleuchten und damit der Waschdüsen angeordnet. Zur Vermeidung eines ständigen Auslaufens der Waschflüssigkeit durch die Waschdüse werden häufig Rückschlagventile in der Waschflüssigkeitsleitung eingesetzt, die oberhalb eines vorgesehenen Drucks in der Waschflüssigkeitsleitung eine Strömung von Waschflüssigkeit zu der Waschdüse ermöglichen. Man könnte daran denken, das Ablassventil und das Rückschlagventil hintereinander in der Waschflüssigkeitsleitung anzuordnen. Hierdurch gestaltet sich die Reinigungsvorrichtung jedoch baulich sehr aufwendig. Die erfindungsgemäße Reinigungsvorrichtung besteht aus besonders wenigen Bauteilen, wenn das Ablassventil mit einem gegen die Strömung innerhalb der Waschflüssigkeitsleitung schließenden Rückschlagventil eine bauliche Einheit bildet. Hierdurch lässt sich die erfindungsgemäße Reinigungsvorrichtung besonders einfach montieren.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine Ansicht von vorne auf einen Scheinwerfer mit mehreren Waschdüsen einer erfindungsgemäßen Reinigungsvorrichtung,
- Fig.2: eine bauliche Einheit aus einem Rückschlagventil und einem Ablassventil aus Figur 1,
- Fig.3: eine Schnittdarstellung durch eine Scheibe mit einem darin angeordneten Kanal und einer Waschdüse,
- Fig.4: eine vergrößerte Schnittdarstellung durch den Kanal aus Figur 3 mit einem Ablassventil,
- Fig.5: eine Rückstrahleinheit eines Kraftfahrzeuges mit mehreren Waschdüsen,
- Fig.6: eine Scheibe mit einer zwischen zwei Leuchtbereichen angeordneten Waschdüse.

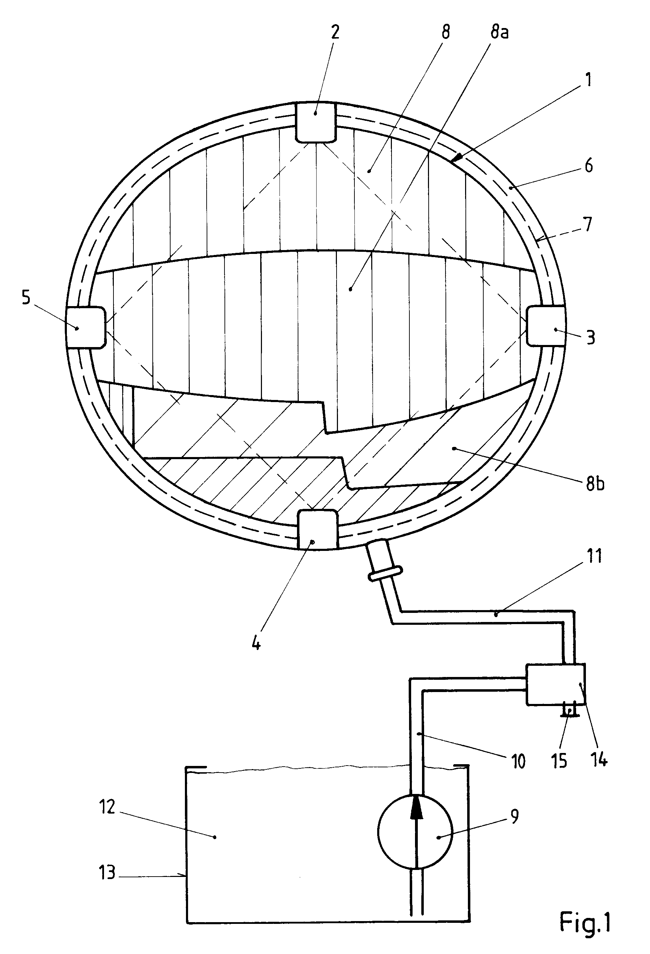

Die Figur 1 zeigt eine Scheibe 1 einer als Frontscheinwerfer ausgebildeten Kraftfahrzeugleuchte eines Kraftfahrzeuges mit mehreren, über den Umfang der Scheibe 1 verteilt angeordneten Waschdüsen 2 - 5. Die Waschdüsen 2 - 5 sind mit einem in einem Befestigungsflansch 6 der Scheibe 1 eingearbeiteten, als Waschflüssigkeitsleitung ausgebildeten Kanal 7 verbunden. Der Befestigungsflansch 6 ist einteilig mit der Scheibe 1 aus Kunststoff gefertigt. Die Scheibe 1 weist mehrere Leuchtbereiche 8, 8a, 8b auf, in denen von einer nicht dargestellten Scheinwerferbirne abgestrahltes Licht unterschiedlich stark gestreut wird. Der in dem Befestigungsflansch 6 eingearbeitete Kanal 7 wird von einer Waschflüssigkeitspumpe 9 über Waschflüssigkeitsleitungen 10, 11 mit Waschflüssigkeit 12 aus einem Vorratsbehälter 13 versorgt. Eine der Waschflüssigkeitsleitungen 10 führt von der Waschflüssigkeitspumpe 9 zu einem Ablassventil 14 mit einem Ablasskanal 15. Von dem Ablassventil 14 führt die zweite Waschflüssigkeitsleitung 11 zu dem in dem Befestigungsflansch 6 eingearbeiteten Kanal 7.

Bei einem Betrieb der Waschflüssigkeitspumpe 9 ist der Ablasskanal 15 des Ablassventils 14 verschlossen und Waschflüssigkeit 12 wird von den Waschdüsen 2 - 5 auf die Scheibe 1 gesprüht. Die Waschdüsen 2 - 5 sind mit einem geringen Abstand zur Scheibe 1 angeordnet, so dass die Scheibe 1 ausschließlich durch das Aufsprühen der Waschflüssigkeit 12 gereinigt wird. Nach einem Abschalten der Waschflüssigkeitspumpe 9 verbindet das Ablassventil 14 die zu den Waschdüsen 2 - 5 führende Waschflüssigkeitsleitung 11 mit dem Ablasskanal 15. Anschließend läuft die Waschflüssigkeit 12 aus dem in der Scheibe 1 angeordneten Kanal 7 heraus.

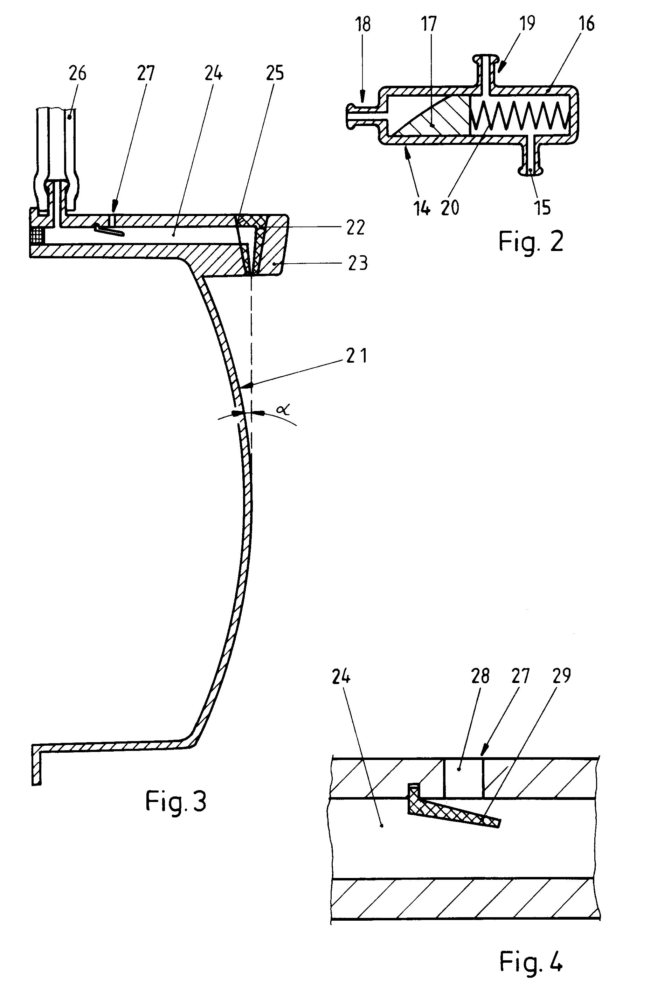

Die Figur 2 zeigt das Ablassventil 14 aus Figur 1 in einem Längsschnitt. Das Ablassventil 14 hat ein Gehäuse 16 mit einem darin beweglich angeordneten Kolben 17. Das Gehäuse 16 hat zwei Anschlüsse 18, 19 für die zu den Waschdüsen 2 - 5 und zu der Waschflüssigkeitspumpe 9 führenden Waschflüssigkeitsleitungen 10, 11. Der Ablasskanal 15 durchdringt das Gehäuse 16 in einer dem Anschluss 19 für die Waschdüsen 2 - 5 gegenüberliegenden Seite. Der Kolben 17 ist von einer Feder 20 in Richtung des Anschlusses 18 für die Waschflüssigkeitspumpe 9 vorgespannt.

Bei einem Betrieb der in Figur 1 dargestellten Waschflüssigkeitspumpe 9 wird der Kolben 17 gegen die Kraft der Feder 20 nach rechts bewegt, bis der Anschluss 19 für die zu den Waschdüsen 2 - 5 führende Waschflüssigkeitsleitung 11 freigegeben ist. Hierdurch gelangt die Waschflüssigkeit 12 zu den Waschdüsen 2 - 5. Nach einem Abschalten der Waschflüssigkeitspumpe 9 bewegt sich der Kolben 17 durch die Kraft der Feder 20 nach links, bis der Anschluss 19 für die zu den Waschdüsen 2 - 5 führende Waschflüssigkeitsleitung 11 mit dem Ablasskanal 15 verbunden ist. Hierdurch kann der in dem Befestigungsflansch 6 der Scheibe 1 eingearbeitete Kanal 7 leerlaufen. Die Federkraft ist hierbei so eingestellt, dass sich der Kolben 17 nicht durch eine auf ihm stehende Waschflüssigkeitssäule bewegt. Deshalb kann man den in Figur 1 dargestellten Vorratsbehälter 13 oberhalb der Scheibe 1 anordnen, ohne dass die Waschflüssigkeit 12 durch die Waschdüsen 2 - 5 ausläuft. Das Ablassventil 14 dient damit gleichzeitig als Rückschlagventil, welches bei bekannten Reinigungsvorrichtungen häufig eingesetzt wird.

Die Figur 3 zeigt einen Längsschnitt durch eine Scheibe 21 einer Kraftfahrzeugleuchte mit einer in einem oberen Bereich angeordneten, mit ihrem Sprühstrahl nach unten weisenden Waschdüse 22. Die Waschdüse 22 ist in einer einteilig mit der Scheibe 21 gefertigten Aufnahme 23 befestigt. Hierfür hat die Aufnahme 23 eine keilförmige Ausnehmung 25, in die die ebenfalls keilförmig gestaltete Waschdüse 22 eingesteckt ist. Die Waschdüse 22 kann beispielsweise aus demselben Material gefertigt sein wie die Scheibe 21 und in der Ausnehmung 25 mit einem durchsichtigen Klebstoff befestigt sein. Hierdurch ist die Waschdüse 22 nahezu unsichtbar. Die Waschdüse 22 sprüht Waschflüssigkeit mit einem Winkel α von ungefähr 30 - 40° auf die Scheibe 21. Weiterhin ist in dem oberen Bereich der Scheibe 21 ein Kanal 24 eingearbeitet, der bis zu einem Anschluss für eine Waschflüssigkeitsleitung 26 geführt ist. In dem Kanal 24 ist ein Ablassventil 27 angeordnet.

Zur Verdeutlichung ist der das Ablassventil 27 aufweisende Bereich des Kanals 24 aus Figur 3 in Figur 4 vergrößert dargestellt. Das Ablassventil 27 hat einen in die Umgebung weisenden Ablasskanal 28, der von einer gummielastischen Membran 29 verschließbar ist. In Grundstellung ist die Membran 29 in einer den Ablasskanal 28 mit dem Kanal 24 verbindenden Stellung vorgespannt. Bei einem Druck innerhalb des Kanals 24 verschließt die Membran 29 den Ablasskanal 28. Hierdurch wird der Ablasskanal 28 bei einer Förderung der Waschflüssigkeit zu der in Figur 3 dargestellten Waschdüse 22 geschlossen. Nach dem Sprühvorgang öffnet die gummielastische Membran 29 den Ablasskanal 28, so dass Luft in den Kanal 24 eindringt und verbleibende Waschflüssigkeit durch die Waschdüse 22 auslaufen kann.

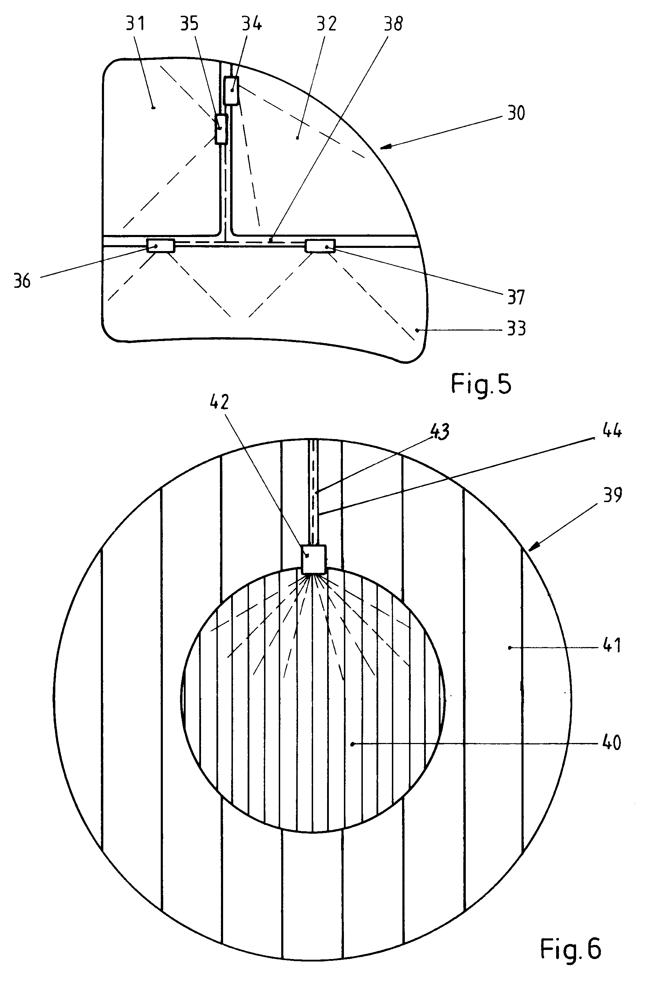

Die Figur 5 zeigt eine Rückstrahleinheit 30 eines Kraftfahrzeuges mit mehreren, beispielsweise als Fahrtrichtungsanzeiger, Bremslicht und Rücklicht ausgebildeten Kraftfahrzeugleuchten 31 - 33. Jede der Kraftfahrzeugleuchten 31 - 33 weist eine oder mehrere Waschdüsen 34 - 37 auf. Die Waschdüsen 34 - 37 werden über zwischen den Kraftfahrzeugleuchten 31 - 33 geführten Waschflüssigkeitsleitungen 38 mit Waschflüssigkeit versorgt.

Die Figur 6 zeigt eine Scheibe 39 einer als Paraboloid-Scheinwerfer ausgebildeten Kraftfahrzeugleuchte. Die Scheibe 39 hat einen zentralen Leuchtbereich 40, der bei Abblendlicht durchleuchtet wird, und einen ringförmigen, den zentralen Leuchtbereich 40 konzentrisch umschließenden Leuchtbereich 41, der bei Fernlicht durchleuchtet wird. Im oberen Bereich des zentralen Leuchtbereichs 40 ist eine Waschdüse 42 mit einem nach unten gerichteten Sprühbereich angeordnet. Eine die Waschdüse 42 mit Waschflüssigkeit versorgende Waschflüssigkeitsleitung 43 ist zum größten Teil zwischen den beiden Leuchtbereichen 40, 41 geführt und in einem in der Scheibe 39 eingearbeiteten Kanal 44 verlegt. Die Waschflüssigkeitsleitung 43 hat in dem Kanal 44 ein geringes Spiel, so dass sie sich beispielsweise bei Frost ausdehnen kann, ohne dass eine Beschädigung der Scheibe 39 zu befürchten ist.

## Patentansprüche

1. Reinigungsvorrichtung für eine Scheibe einer Kraftfahrzeugleuchte mit zumindest einer zum Besprühen der Scheibe mit Waschflüssigkeit vorgesehenen Waschdüse, **dadurch gekennzeichnet,** dass die Waschdüse (2 - 5, 22, 34 - 37, 42) in einem unmittelbar an die Scheibe (1, 21, 39) angrenzenden Rand oder auf der Scheibe (1, 21, 39) befestigt ist.

2. Reinigungsvorrichtung nach Anspruch 1, **dadurch gekennzeichnet,** dass die Waschdüse (2 - 5, 22, 34 - 37, 42) als Fluidic-Düse ausgebildet ist.

3. Reinigungsvorrichtung nach Anspruch 1 oder 2, **dadurch gekennzeichnet,** dass der Winkel des Waschflüssigkeitsstrahls zu der Oberfläche der Scheibe (1, 21, 39) ungefähr 30-40° beträgt.

4. Reinigungsvorrichtung nach zumindest einem der vorhergehenden Ansprüche, **dadurch gekennzeichnet,** dass die Waschdüse (2 - 5, 22, 34 - 37, 42) einen Abstand von ungefähr 15 mm zu der Scheibe (1, 21, 39) aufweist.

5. Reinigungsvorrichtung nach zumindest einem der vorhergehenden Ansprüche, **dadurch gekennzeichnet,** dass mehrere Waschdüsen (2 - 5) über den Umfang der Scheibe (1) verteilt angeordnet sind.

6. Reinigungsvorrichtung nach zumindest einem der vorhergehenden Ansprüche, **dadurch gekennzeichnet,** dass die Waschdüse (42) mit geringem Abstand von dem Zentrum der Scheibe (39) mit der Sprührichtung auf das Zentrum gerichtet angeordnet ist.

7. Reinigungsvorrichtung nach zumindest einem der vorhergehenden Ansprüche, **dadurch gekennzeichnet,** dass die Waschdüse (22, 42) mit der Sprührichtung nach unten weisend ausgerichtet ist.

8. Reinigungsvorrichtung nach zumindest einem der vorhergehenden Ansprüche, **dadurch gekennzeichnet,** dass die Scheibe (39) einen Kanal (44) zur Aufnahme einer zu der Waschdüse (42) führenden Waschflüssigkeitsleitung (43) aufweist.

9. Reinigungsvorrichtung nach zumindest einem der vorhergehenden Ansprüche, **dadurch gekennzeichnet,** dass der Kanal (44) breiter ist als die Waschflüssigkeitsleitung (43).

10. Reinigungsvorrichtung nach zumindest einem der vorangehenden Ansprüche, **dadurch gekennzeichnet,** dass der Kanal (7, 24) als Waschflüssigkeitsleitung ausgebildet ist.

11. Reinigungsvorrichtung nach zumindest einem der vorhergehenden Ansprüche, **dadurch gekennzeichnet,** dass die Waschflüssigkeitsleitung (38) zwischen zwei Kraftfahrzeugleuchten (31 - 33) geführt ist.

12. Reinigungsvorrichtung nach zumindest einem der vorhergehenden Ansprüche, **dadurch gekennzeichnet,** dass die Waschflüssigkeitsleitung (43) zwischen zwei in der Scheibe eingearbeiteten Leuchtbereichen (40, 41) geführt ist.

13. Reinigungsvorrichtung nach zumindest einem der vorhergehenden Ansprüche, **dadurch gekennzeichnet,** dass die Waschdüse (2 - 5, 22, 34 - 37, 42) aus dem Material der Scheibe (1, 21, 39) gefertigt ist.

14. Reinigungsvorrichtung nach zumindest einem der vorhergehenden Ansprüche, **dadurch gekennzeichnet,** dass die Waschdüse (2 - 5, 22, 34 - 37, 42) oder eine zum Einsetzen der Waschdüse (2 - 5, 22, 34 - 37, 42) vorgesehene Aufnahme (23) einteilig mit der Scheibe (1, 31, 39) gefertigt ist.

15. Reinigungsvorrichtung nach zumindest einem der vorhergehenden Ansprüche, **dadurch gekennzeichnet,** dass die Aufnahme (23) für die Waschdüse (22) eine keilförmige Ausnehmung (25) aufweist und die Waschdüse (22) entsprechend der Ausnehmung (25) gestaltet ist.

16. Reinigungsvorrichtung nach zumindest einem der vorhergehenden Ansprüche, **dadurch gekennzeichnet,** dass sie Mittel (Ablassventil 14, 27) zum Leerlaufen des Kanals (7, 24) nach dem Besprühen der Scheibe (1, 21) aufweist.

17. Reinigungsvorrichtung nach Anspruch 16, **dadurch gekennzeichnet,** dass die Mittel zum Leerlaufen des Kanals (7, 24) ein von dem Pumpendruck vorgespanntes, einen Ablasskanal (15, 28) verschließendes Ablassventil (14, 27) aufweisen.

18. Reinigungsvorrichtung nach Anspruch 17, **dadurch gekennzeichnet,** dass das Ablassventil (27) eine innerhalb des Kanals (24) angeordnete, in eine den Ablasskanal (28) freigebende Stellung vorgespannte gummielastische Membran (29) hat.

19. Reinigungsvorrichtung nach Anspruch 17, **dadurch gekennzeichnet,** dass das Ablassventil (14) mit einem gegen die Strömung innerhalb der Waschflüssigkeitsleitung (10, 11) schließenden Rückschlagventil eine bauliche Einheit bildet.
